# EUROPEAN PATENT SPECIFICATION

(11) **EP 1 393 512 B1**
(45) Date of publication and mention of the grant of the patent: **16.08.2006**
(21) Application number: 02794437.0
(22) Date of filing: 26.12.2002
(51) Int. Cl.: H04L 12/56

(54) **A METHOD AND APPARATUS FOR PRIORITY BASED FLOW CONTROL IN AN ETHERNET ARCHITECTURE**
VERFAHREN UND VORRICHTUNG ZUR PRIORITÄTS-BASIERTEN FLUSSKONTROLLE IN EINER ETHERNET-ARCHITEKTUR
PROCEDE ET APPAREIL DE CONTROLE DE FLUX EN FONCTION DES PRIORITES DANS UNE ARCHITECTURE ETHERNET

(30) Priority: 03.01.2002 US 37669
(43) Date of publication of application: 03.03.2004
(73) Proprietor: INTEL CORPORATION, Santa Clara, CA 95052 (US)
(72) Inventor: FEUERSTRAETER, Mark, T., Granite Bay, CA 95746 (US); BOOTH, Bradley, J., Austin, TX 78735 (US)
(74) Representative: Dunlop, Hugh Christopher
(86) International application number: PCT/US2002/041566
(87) International publication number: WO 2003/058896

(56) References cited:
- DE-A- 10 123 821
- US-A- 5 983 278
- US-A1- 2002 087 723
- NOUREDDINE W ET AL: "SELECTIVE BACK-PRESSURE IN SWITCHED ETHERNET LANS" 1999 IEEE GLOBAL TELECOMMUNICATIONS CONFERENCE. GLOBECOM'99. SEAMLESS INTERCONNECTION FOR UNIVERSAL SERVICES. RIO DE JANEIRO, BRAZIL, DEC. 5-9, 1999, IEEE GLOBAL TELECOMMUNICATIONS CONFERENCE, NEW YORK, NY: IEEE, US, vol. 2, 5 December 1999 (1999-12-05), pages 1256-1263, XP001016912 ISBN: 0-7803-5797-3
- ROUSSOS J K ET AL: "CONGESTION CONTROL PROTOCOLS FOR INTERCONNECTED LANS SUPPORTING VOICE AND DATA TRAFFIC" COMPUTER COMMUNICATIONS, ELSEVIER SCIENCE PUBLISHERS BV, AMSTERDAM, NL, vol. 17, no. 1, 1994, pages 25-34, XP000415044 ISSN: 0140-3664

## Description

### TECHNICAL FIELD

The present invention generally relates to the field of data networks and, more particularly, to a method and apparatus for priority based flow control within an Ethernet network architecture.

### BACKGROUND

As computer technology has evolved, so too has the use of networks to communicatively couple computer systems together enabling the exchange information. One example of just such a network topology is the *Carrier Sense Multiple Access with Collision Detection (CSMAICD) Access Method and Physical Layer Specification,* more commonly known as the Ethernet standard topology, developed and promoted under the auspices of the Institute of Electrical and Electronic Engineers as standard 802.3 (2000). One of the provisions of the Ethernet standard (802.3x) facilitates point-to-point flow control between two network devices.

Simplistically, flow control is a mechanism implemented within a media access controller (MAC) of an Ethernet network interface of a networked device to manage the flow of data between two full-duplex Ethernet devices (i.e., workstation, hub, switch, router, etc.). In accordance with the Ethernet flow control mechanism of 802.3x, a device (or port) that has reached a receive buffer threshold, a condition colloquially referred to as oversubscribed, sends a control message instructing the transmitting device to pause transmission of Ethernet traffic until further notice (or for a set period of time). Once the receive buffer of the previously oversubscribed device is able to accept additional content, another control message may be sent to resume transmission of the Ethernet traffic. In alternate implementations, a timer is used wherein if a receiving device needs to continue an "off' state, another control message must be issued to maintain this state once the timer has expired. In this regard, the Ethernet flow control provisions are colloquially referred to as an XON/XOFF (transmit on/transmit off) schema, wherein the entire Ethernet communication link between two networked devices is either enabled or disabled.

One of the limitations often associated with the conventional Ethernet flow control mechanism of 802.3x is that the mechanism does not discriminate between type(s) of traffic, or priorities of traffic. That is, there is no provision within the rudimentary XON/XOFF Ethernet network interface to distinguish between different priority levels of Ethernet traffic, e.g., produced by applications requiring different class of service, quality of service, etc.. As a result, there is no provision to prioritize time-sensitive network content (e.g., multimedia content) over non-time sensitive content (e.g., email content). Until recently, the conventional Ethernet flow control provisions of IEEE 802.3x were adequate to support the traffic of a typical data network. Today, however, with the increasing popularity of applications requiring uninterrupted flow of content from network resources, the lack of priority-based flow control in the Ethernet architecture is becoming an unbearable limitation. Accordingly, a new flow_control mechanism, unencumbered by the inherent limitations commonly associated with conventional Ethernet flow control is urgently required. Just such a solution is provided in the discussion to follow.
US-A-5983278 describes a multiple priority data flow control method in a switch fabric environment, which includes a buffer, packet data of different class-types from different sources is received, stored in the buffer, processed and outputted to its intended destination. As the buffer fills up, transmission from some of the data sources is stopped to avoid dropping of packets. To avoid packet loss, when the occupancy of the buffer reaches a first threshold value, further transmission of a first-class type of data is precluded from the particular source of that data then being received, while transmission from other sources of that same first-class type of data is not precluded from these other data sources until first-class type of data from such other sources is also received. Further, data of a second-class type is not precluded from being transmitted as long as the amount of data stored in the buffer remains below a second threshold, which is greater than the first threshold. When the occupancy of the buffer reaches that second threshold, further transmissions from the particular source of that second-class type of data then being received is also precluded.

### BRIEF DESCRIPTION OF THE DRAWINGS

The present invention is illustrated by way of example, and not by way of limitation, in the figure of the accompanying drawings in which like reference numerals refer to similar elements and in which:
Fig. 1 is a block diagram of an example data network incorporating an innovative flow control mechanism in accordance with the teachings of the present invention;
Fig. 2 is a block diagram of an example network interface enhanced with an innovative flow control agent, in accordance with one example implementation of the present invention;
Fig. 3 is a graphical illustration of an example receive buffer(s) suitable for use in accordance with the priority based flow control mechanism of the present invention;
Fig. 4 is a graphical illustration of an example transmit buffer suitable for use in accordance with the priority based flow control mechanism of the present invention;
Fig. 5 is a graphical illustration of a flow control management data structure used, for example, in a switch to manage certain aspects of the point-to-point communication link with one or more communicatively coupled network elements, in accordance with one aspect of the present invention;
**Fig. 6** is a graphical illustration of an example Ethernet control message including a flow control priority field, in accordance with one aspect of the present invention;
**Fig. 7** is a flow chart of an example method of implementing flow control, in accordance with one aspect of the present invention;
**Fig. 8** is a flow chart of an example method of throttling a subset of Ethernet traffic, in accordance with one aspect of the present invention; and
**Fig. 9** is a block diagram of an example storage medium comprising a plurality of executable instructions which, when executed, cause an accessing machine to implement one or more aspects of the enhanced network interface, in accordance with an alternate embodiment of the present invention.

### DETAILED DESCRIPTION

The present invention is generally directed to a method and apparatus for priority based flow control in an Ethernet architecture. In this regard, an enhanced network interface (ENI) is introduced incorporating a flow control agent. According to one example implementation, the flow control agent is integrated within a media access controller (MAC) of the ENI to facilitate priority-based flow control.

In accordance with one aspect of the present invention, the flow control agent monitors the receive capability of the ENI, and selectively generates a control message denoting a priority level above or below which the ENI is able to receive Ethernet traffic. The control message is sent to communicatively coupled device(s) to effectively throttle transmission of at least a subset of Ethernet traffic intended for the ENI from devices receiving the control message. In this regard, the flow control agent effectively discriminates between priorities of Ethernet traffic, and selectively throttles a mere subset of such traffic, as necessary, in accordance with the identified receive capability of the a host network interface (e.g., ENI).

In accordance with another aspect of the present invention, the enhanced network interface receives content having different priority levels into a transmit buffer. The media access controller (MAC) of the ENI identifies the destination of received content, an associated flow control priority, if any, associated with the identified destination and selectively forwards only a permissible subset of the content destined for a given network device based, at least in part, on the associated flow control priority level. In this regard, the enhanced network interface facilitates multiple priorities of data to span an Ethernet link, dynamically invoking flow control on only a subset of such priorities. Those skilled in the art will appreciate that having the ability to invoke flow control on a subset of the Ethernet traffic (e.g., only lower priority traffic) effectively enhances the perceived performance of the Ethernet network by only allowing high priority data to traverse the link during periods of congestion.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment. Furthermore, the particular features, structures or characteristics may be combined in any suitable manner in one or more embodiments.

### Example Point-to-Point Ethernet Communication Link

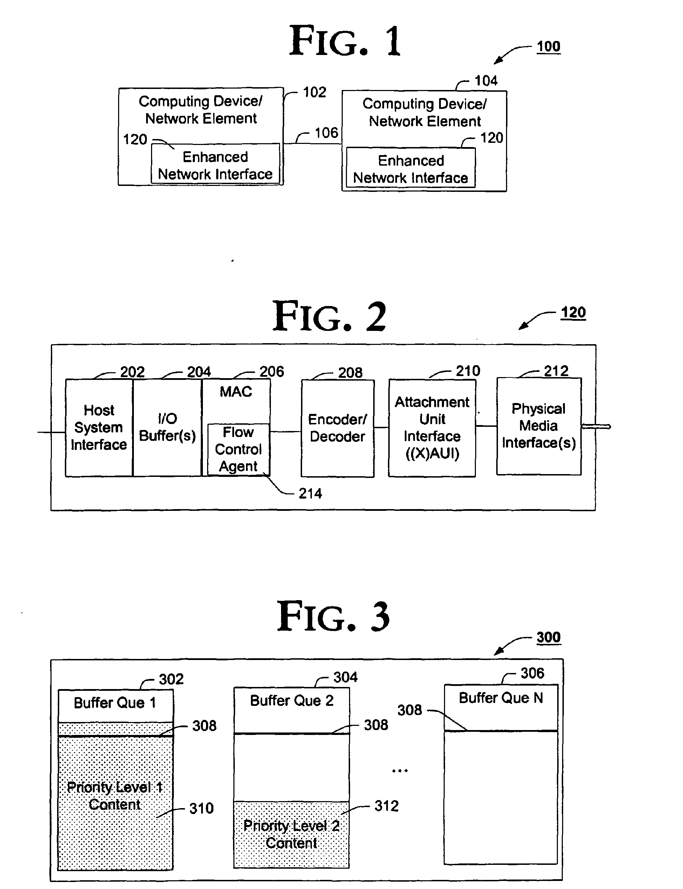

Those skilled in the art will appreciate that communication within an Ethernet network topology is managed on a per-communication link basis. Thus, when discussing flow control within an Ethernet network topology, it is typically understood as flow control between two Ethernet enabled network devices, i.e., workstation(s), hub(s), switch(es), router(s), and the like. An example of just such a network topology is illustrated with reference to Fig. 1.

**Fig.** 1 illustrates a block diagram of an example Ethernet communication link coupling two network devices, in accordance with the teachings of the present invention. More particularly, in accordance with a first embodiment 100, a computing device/network element 102 is coupled to another computing device/network element 104 through Ethernet communication link 106. In accordance with example implementation of the present invention, each of the computing device/network elements 102 and 104 are depicted comprising an enhanced network interface 120, introduced above. In accordance with the teachings of the present invention, to be developed more fully below, enhanced network interface (ENI) 120 integrated within each of the network device(s) 102, 104 effectively establishes a point-to-point Ethernet communication link between the two devices with a heretofore unavailable traffic prioritization (e.g., based on class of service, type of service, quality of service, etc.) capabilities.

As used herein, each of computing device/network element are intended to represent a wide variety of Ethernet network elements known in the art such as, for example, a desktop computing platform, a notebook computing platform, a handheld device (e.g., a personal digital assistant), a mobile communications device, or any of a number of network management devices (hub, switch, router, etc.) with Ethernet networking resources. But for the integration of the enhanced network interface (ENI) 120 described more fully below, each of the computing/network elements are intended to represent such conventional devices as they are currently known in the art - no special capability aside from the ENI 120 is required to practice the teachings of the present invention. Accordingly, the architectural details of the host device(s) 102, 104 need not be described further.

As introduced above, and developed more fully below, ENI 120 is endowed with advanced flow control capability to effectively establish and independently manage different priorities of Ethernet traffic within an Ethernet communication link 106. Accordingly to one aspect of the invention, ENI 120 monitors the receive capability of each of up to a plurality of buffers associated with different content priority levels, and generates a control message denoting a priority level above or below which the ENI has capacity to receive content. According to one implementation, the priority level denotes a level above which the receive buffers of EM 120 can receive content. In such an implementation, one or more buffers at and/or below that associated with the designated priority level have reached a capacity threshold.

In accordance with another aspect of the invention, ENI 120 is responsive to receipt of control messages denoting a flow control priority level. In this regard, ENI 120 monitors content in a transmission buffer and forwards select content from the transmission buffer to a remote network entity based, at least in part, on control messages received from the remote network element.

Although not particular denoted in Fig. 1, it is to be appreciated that enhanced network interface (ENI) 120 may well be compatible with legacy Ethernet interface(s) to implement the conventional flow control provisions enumerated in the aforementioned IEEE 802.3x. That is, if both network elements of the point-to-point Ethernet communication link are endowed with the innovative ENI 120, priority based flow control may well be established over the communication link 106. Alternatively, if one of the network elements is endowed with ENI 120, while the other element of the point-to-point Ethernet communication link is populated with a conventional network interface, ENI 120 will participate in the conventional flow control mechanism defined in 802.3x.

### Example Network Interface with Priority Based Flow Control

**Fig. 2** illustrates a block diagram of an example enhanced network interface (ENI) incorporating the teachings of the present invention. In accordance with the illustrated example embodiment of Fig. 2, ENI 120 is depicted comprising a host system interface 202, one or more input/output buffer(s) 204, a media access controller 206, an encoder/decoder block 208, an attachment unit interface 210, and one or more physical media interface(s) 212, each coupled as depicted. In accordance with the teachings of the present invention, ENI 120 is depicted comprising an innovative flow control agent 214 to facilitate priority based flow control with remote network interface(s) similarly endowed with priority-based flow control features. In the illustrated example implementation of Fig. 2, flow control agent 214 is integrated within one (or more) media access controller(s) 206. In accordance with such an implementation, flow control agent 214 may well be embodied in software or firmware content executed by MAC to implement the priority-based flow control features described herein. Those skilled in the art will appreciate, however, that flow control agent 214 may well be practiced as an independent element of the network interface as, for example, an application specific integrated circuit (ASIC), a dedicated microcontroller, and the like. In this regard, alternate implementations of the flow control agent 214 are anticipated within the scope of the claimed invention.

As used herein, host system interface 202 provides a communication link with a host processing system. In certain implementations, host system interface 202 provides a communication interface with, for example, applications executing on a host computing system that beneficially utilize the network communication resources of ENI 120. As will be discussed more fully below, in accordance with such an example implementation (e.g., as a network interface card (NIC) of a computing system) content from such host applications is received through host system interface 202 and buffered in one or more transmit buffer(s) of I/O buffer(s) 204.

As used herein, I/O buffer(s) 204 are intended to represent any of a wide variety of memory systems known in the art. According to one implementation, I/O buffer(s) 204 include transmit data structure(s), or queues, and receive data structure(s). According to one example implementation, a number of receive queues are maintained and managed by the MAC 206, wherein each queue is associated with a particular content priority level. Thus, as will be discussed more fully below, flow control agent 214 of MAC 206 monitors the receive capacity of such receive queues in making priority based flow control decisions. It will be appreciated by those skilled in the art that I/O buffer(s) 204 may well be comprised of any of a number of many different types of physical memory/storage devices.

As used herein, encoder/decoder 208, AUI 210 and PMI 212 are each intended to represent such elements of a typical network interface. That is, but for their relationship with MAC 206 in general, and flow control agent 214 in particular, such elements 208-212 are intended to represent any of a wide variety of such device(s) known in the art and, as such, need not be further described herein.

As introduced above, media access controller (MAC) 206 controls the flow of information within the network interface. In accordance with the illustrated example implementation of Fig. 2, MAC 206 is depicted comprising an innovative flow control agent 214. As will be discussed more fully below, flow control agent 214 selectively implements priority-based flow control within a point-to-point Ethernet communication link between two network devices. In this regard, flow control agent 214 detects a priority level associated with content, and selectively forwards only a subset of content to a coupled device in accordance with a priority level identified in a control message received from the coupled device. As used herein, the priority level can be dictated by an application generating the content (e.g., if received from a host application), or embedded within an administrative section (header/footer) of the content. According to one implementation, flow control agent 214 checks administrative information of content received, e.g., from coupled network element for one or more of a class- of-service (CoS), type-of-service (ToS), and/or a quality-of-service (QoS) indication denoting a priority level, and stores such received content in a buffer commensurate with its identified priority level.

In addition, flow control agent 214 monitors the capacity of receive buffers of the network interface, and selectively generates and issues control message(s) to throttle transmission of content from a coupled device. As will be developed more fully below, flow control agent 214 monitors the receive buffers of I/O buffers to identify the receive capability of each of the buffers associated with one or more content priority levels. Once a buffer has reached a particular threshold, flow control agent 214 generates a control message denoting the priority level above which content can still be received. Issuance of the control message with the priority level information causes an appropriately endowed receiving network interface to throttle traffic having a priority level below that which has been denoted in the control message. According to one implementation, the network device receiving the control message pauses transmission of traffic having a priority level below that which is denoted in the control message until a subsequent control message is received modifying/eliminating the hold for the particular priority level As indicated above, in alternate implementations, a timer may well be used wherein communication associated with an otherwise suspended priority level may resume after a particular period of time (either pre-determined, or denoted within the received control message). In this regard, flow control agent 214 effectively implements a priority-based flow control mechanism, improving the perceived capacity and capability of the Ethernet network.

### Example Data Structure(s)

Turning to **Fig. 3** a graphical representation of at least a subset of an example memory system 300 is presented. In accordance with the illustrated example of Fig. 3, memory system 300 is depicted comprising a plurality of receive buffer queues 302, 304 and 306. According to one example implementation of the present invention, flow control agent 214 effectively uses each of the buffers 302, 304, 306 as receive buffers to receive content from a remote network device. In accordance with the teachings of the present invention, each of the buffers is associated with content of a disparate priority level, e.g., priority level 1 content, priority level 2 content, through priority level N content (where N denotes the number of priority levels supported by the interface or the communication protocol). As introduced above, each of the buffer queues 302, 304 and 306 may well be comprised of a number of memory devices. Alternatively, each of the different buffers may merely occupy disparate space of a single memory device. Moreover, although illustrated as roughly the same size, those skilled in the art will appreciate that in certain implementations it may be advantageous to prioritize one level of traffic over another. One way in which this may be implemented is to provide the higher priority level with more memory and a higher threshold, while lower priority levels are allocated less memory and/or a lower buffer threshold.

As will be developed more fully below, each of the buffer queues 302, 304 and 306 are marked with a threshold line 308. As used herein, flow control agent 214 monitors the content (e.g., 310, 312, etc.) within each of the buffers 302, 304, 306, and when such content reaches and/or exceeds the threshold 308, flow control agent 214 generates a control message denoting the priority level associated with the buffer which has reached the threshold 308. A receiving network device implementing the teachings of the present invention will then suspend transmission of content having a priority level at or below the priority level denoted in the received control message.

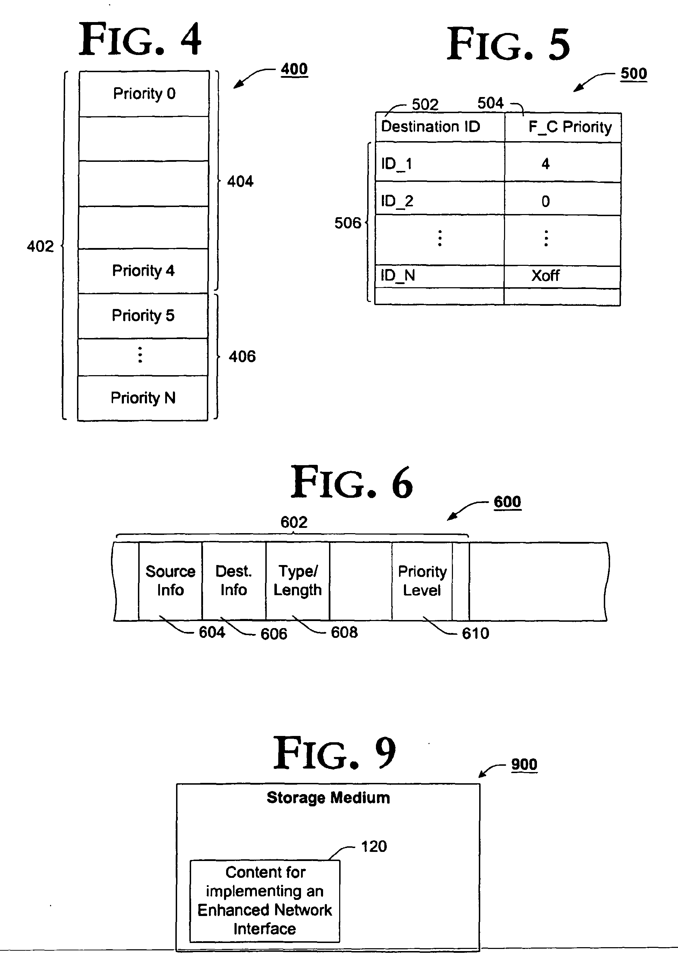

**Fig. 4** provides a graphical illustration of a transmission queue 400 suitable for use in accordance with the teachings of the present invention. In accordance with the illustrated example implementation of Fig. 4, transmission queue 400 is depicted comprising a plurality of entries 402, wherein each entry is associated with a datagram (or a stream) of content. According to one example implementation, each of the entries 402 represents a plurality of content having a similar priority level. It is to be appreciated that the number of transmit and receive queues need not be the same. In one example implementation, flow control agent 214 may well implement a number of transmit queues to facilitate precise flow control as enabled by a receiving network element, while implementing two receive buffers, one for high and another for low priority traffic. That is, the number of transmit queues and receive queues are independent of one another.

As will be developed more fully below, if a flow control agent 214 receives a control message denoting a priority level of four (4), transmission of content in entries associated with a priority level at or below priority level four (4) 404 will be suspended, while transmission of content in entries 406 associated with priority levels above four (4), i.e., priority level five (5) and above, can continue.

**Fig. 5** is a graphical illustration of an example management data structure 500, suitable for use in accordance with the teachings of the present invention. More particularly, Fig. 5 graphically illustrates an example management data structure 500 used by a network interface implementing priority-based flow control with multiple devices, i.e., over multiple point-to-point Ethernet communication links. As shown, the example management data structure 500 includes at least a destination identifier field 502, a flow control priority field 504 and a number of entries 506 associated with the number of active point-to-point communication links. Those skilled in the art will appreciate that such a data structure 500 may well be implemented in a network element (hub, switch, router, etc.) where a single flow control agent 214 supports multiple communication ports (i.e., with up to a commensurate number of active point-to-point communication links). It will be appreciated that in the case where each port of such a network device has a dedicated flow control agent 214, e.g., within a dedicated MAC 206, such a data structure may not be required.

As used herein, the destination identifier field is used to uniquely identify the communication link and/or the remote network element coupled through the communication link. In this regard, it may be a hard-coded port value, dynamically updated with a network element identifier, and the like. The flow control priority field 502 is used to store a current flow control priority level associated with the particular communication link. As shown, certain of the entries 506 denote a flow-control priority level. In accordance with one example implementation of the present invention, flow control agent 214 is compatible with legacy network interface that rely on the conventional Xon/Xoff flow control scheme, as depicted.

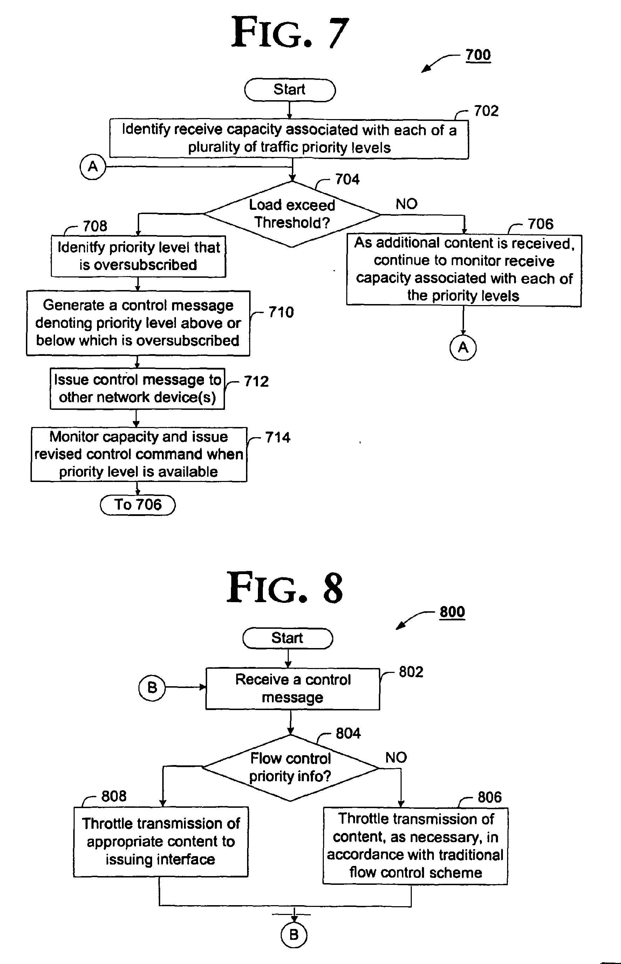

With reference to **Fig. 6,** an example control message data structure is graphically illustrated In accordance with the illustrated example of Fig. 6, control message datagram 600 is depicted comprising an administrative section 602 including at least a subset of datagram source information field 604, destination information field 606, a type/length field 608 and a flow control priority level field 610. As used herein, the administrative info 602 may well be embodied in a header, a footer, or some other subset of the datagram.

The source information field 604 denotes the source of the datagram, while the destination info denotes the ultimate destination of the datagram. The type/length field 608 denotes that the datagram is of the control message type, and provides an indication as to the size of the datagram. In accordance with the teachings of the present invention, the priority level field 610 denotes the flow control priority provisions implemented on a per-link basis. According to certain implementations, control messages 600 are effective on a per-link basis and, in this regard, the flow control priority level 610 merely denotes the flow control provisions of the link. Alternate implementations are envisioned wherein the priority level information is used across multiple point-to-point links communicatively coupling a content source 102 with a content destination 104. Those skilled in the art will appreciate that in accordance with one or more implementations of the priority-based flow control of the present invention, control message 600 may well be used to enable communication for a given priority level(s), disable communication for a given priority level(s), and/or refresh a disable of communication for a given priority level(s) (i.e., when a timer mechanism is used to automatically enable a previously disabled priority level).

### Example Operation and Implementation

Having introduced the operating environment and architectural elements of the present invention, above, attention is now directed to Figs. 7 and 8, wherein an example implementation of the priority-based flow control mechanism is presented in greater detail. For ease of illustration, and not limitation, the methods of Figs. 7 and 8 will be developed with continued references to Figs. 1-6, as appropriate. Nonetheless, it is to be appreciate that the teachings of Figs. 7 and 8 may well be implemented in alternate network architectures/configurations without deviating from the spirit and scope of the present invention.

**Fig. 7** is a flow chart of an example method of implementing flow control, in accordance with one aspect of the present invention In accordance with the illustrated example implementation of Fig. 7, the method 700 begins with block 702 by identifying a receive capacity/capability of a network interface. In accordance with the teachings of the present invention, flow control agent 214 scans each of a plurality of receive buffers 302, 304, 306 to determine whether the content in the buffer(s) has reached/exceeded a threshold 308, block 704. As introduced above, each of the buffers 302, 304, 306 is associated with a disparate content priority level.

If, in block 704, that the buffer load has not exceeded a threshold 308, network interface allows continue content to be received from the remote network device, as flow control agent 214 continues to monitor the receive capacity associated with each of the priority levels until a threshold in one of the buffers is reached

If the threshold of a buffer is reached the process continues with block 708 wherein the flow control agent 214 identifies the priority level that is oversubscribed. In this regard, flow control agent 214 identifies which of the receive buffer(s) 302, 304, 306 has reached the threshold 308, and generates a control message 600 denoting the priority level 610 above or below which is oversubscribed, block 710. In accordance with one implementation, the priority level denotes the level at and below which the flow control agent 214 is suspending transmission. In alternate implementations, the flow control priority level denoted in field 610 of a control message 600 may well denote a content priority level above which is oversubscribed, suspending transmission of content at and above the level denoted in the control message 600.

In block 712 flow control agent 214 issues the control message 600 to other network device(s). More particularly, flow control agent 214 transmits the generated control message 600 denoting a flow control priority level 610 to a network element coupled through the point-to-point Ethernet communication link. According to one example implementation, once the control message 600 has been issued, flow control agent 214 monitors the capacity of buffer(s) associated with a priority level denoted in the generated control message 600 and issues a revised control command when the buffer associated with the priority level becomes available (i.e., falls below the threshold 308), block 714. The process then continues with block 706.

Turning to **Fig. 8**, a flow chart of an example method of throttling a subset of Ethernet traffic is presented, in accordance with one aspect of the present invention. In accordance with the illustrated example implementation of Fig. 8, the process begins with block 802 wherein the network interface receives a control message 600 from a remote network element coupled through a point-to-point Ethernet communication link (e.g., 106). In accordance with one example implementation, the control message 600 is routed to a media access controller 206 of the receiving network interface. In accordance with the teachings of the present invention, a flow control agent 214 implemented within the network interface determines whether the control message 600 includes flow control priority information, block 804.

If flow control agent 214 does not identify a priority level field 610 in the received control message 600, the process continues with block 806 wherein the flow control agent 214 throttles transmission of all content within the transmission buffer 400 on the point-to-point link, as necessary, in accordance with the conventional Ethernet flow control mechanism of 802.3x

If, however, flow control agent 214 identifies a priority level field 610 in the received control message 600, flow control agent 214 throttles transmission of an appropriate subset of the total content within the transmission buffer 400, block 808, in accordance with the priority-based flow control features of the present invention. As described above, if flow control agent 214 receives a control message 600 including a priority level field 610 populated with an indication that priority level(s) four (4) and below are oversubscribed, flow control agent 214 merely authorizes the continued transmission by MAC 206 of content 406 of the transmission buffer 400, representing that content having a priority level above that which is oversubscribed.

### Alternate Embodiment(s)

**Fig. 9** is a block diagram of an example storage medium comprising a plurality of executable instructions which, when executed, cause an accessing machine to implement one or more aspects of the innovative priority-based flow control mechanism of the present invention. In this regard, storage medium 900 includes content for implementing an enhanced network interface 120 with priority based flow control features. scalable network interface 200 of the present invention, in accordance with an alternate embodiment of the present invention.

In the description above, for the purposes of explanation, numerous specific details are set forth in order to provide a thorough understanding of the present invention. It will be apparent, however, to one skilled in the art that the present invention may be practiced without some of these specific details. In other instances, well-known structures and devices are shown in block diagram form

The present invention includes various steps. The steps of the present invention may be performed by hardware components, such as those shown in Figs. 1-5, or may be embodied in machine-executable instructions, which may be used to cause a general-purpose or special-purpose processor or logic circuits programmed with the instructions to perform the steps. Alternatively, the steps may be performed by a combination of hardware and software. Moreover, although the invention has been described in the context of a network interface device, those skilled in the art will appreciate that such functionality may well be embodied in any of number of alternate embodiments such as, for example, integrated within a computing device, and is readily adapted to wireless Ethernet implementations as well as the wired environment described herein.

The present invention may be provided as a computer program product which may include a machine-readable medium having stored thereon instructions which may be used to program a computer (or other electronic devices) to perform a process according to the present invention. The machine-readable medium may include, but is not limited to, floppy diskettes, optical disks, CD-ROMs, and magneto-optical disks, ROMs, RAMs, EPROMs, EEPROMs, magnet or optical cards, flash memory, or other type of media / machine-readable medium suitable for storing electronic instructions. Moreover, the present invention may also be downloaded as a computer program product, wherein the program may be transferred from a remote computer to a requesting computer by way of data signals embodied in a carrier wave or other propagation medium via a communication link (e.g., a modem or network connection).
Many of the methods are described in their most basic form but steps can be added to or deleted from any of the methods and information can be added or subtracted from any of the described messages without departing from the basic scope of the present invention. For example, in one embodiment a single receive buffer is employed utilizing different threshold set points, which would effectively distinguish the different levels of priority flow control. As an example, if 50% of the single que is full, send a flow control message with value 4 (half way point, i.e. high and low traffic), at 75% full, send a message with value 2, etc. It will be apparent to those skilled in the art that many further modifications and adaptations can be made. The particular embodiments are not provided to limit the invention but to illustrate it. The scope of the present invention is not to be determined by the specific examples provided above but only by the claims below.

## Claims

1. A method comprising:
identifying (702) a receive capability associated with a plurality of priority levels of Ethernet traffic for a network device (102, 104);
determining a flow control priority level (610) based on at least one of a class-of service, a type-of-service, and a quality-of-service, wherein the flow control priority level (610) denotes any one of said plurality of priority levels above or below which the network device (102, 104) is able to receive Ethernet traffic; and
generating (710) a control message (600) including the flow control priority level (610) to cause throttling of Ethernet traffic above or below the flow control priority level from network devices receiving the control message.

2. A method according to claim 1, further comprising:
transmitting the generated control message (600) to a communicatively coupled network device, whereupon receipt of the generated control message (600) the communicatively coupled network device acts in accordance with the received control message (600) to suspend a subset of Ethernet traffic.

3. A method according to claim 1, wherein identifying comprises:
determining available buffer capacity for each of a plurality of buffers (302, 304, 306) associated with a commensurate plurality of Ethernet priority levels.

4. A method according to claim 3, wherein the available buffer capacity associated with a particular Ethernet priority level denotes the ability of the buffer (302, 304, 306) to receive additional Ethernet traffic of that priority level.

5. A method according to claim 3, wherein the buffer (302, 304, 306) for each priority level is comprised of one or more memory device(s).

6. A method according to claim 3, wherein the buffers (302, 304, 306) associated with each of the priority levels are virtual buffers implemented within a common physical buffer.

7. A method according to claim 3, wherein the generated control message (600) includes an indication of the priority level above which a receive buffer has available capacity to receive Ethernet traffic of an associated priority level.

8. A method according to claim 7, wherein a receiving network device initiates a pause in transmission of Ethernet traffic having a priority level below that indicated in the received control message (600).

9. A method according to claim 1, wherein generating a control message (600) comprises:
generating an Ethernet control packet including a priority field, the priority field denoting the flow control priority level (610).

10. A method according to claim 9, wherein the priority field is included in a header portion of the Ethernet control packet.

11. A method according to claim 1, further comprising:
receiving Ethernet traffic;
identifying a priority level associated with each packet of received Ethernet traffic; and
forwarding each received packet to a receive buffer based, at least in part, on the identified priority level associated with the Ethernet packet.

12. A method according to claim 11, further comprising:
monitoring the receive capability of buffers associated with each of the priority levels of Ethernet traffic; and
issuing control messages, as necessary, to throttle transmission of at least a subset of Ethernet traffic in accordance with the identified receive capability associated with the one or more priority levels.

13. A data medium having stored thereon computer product code adapted to perform all the steps of any one of claims 1 to 12 when said program code is run on a computer.

14. A network interface (120) comprising :
a plurality of receive buffers (302, 304, 306), each associated with a particular priority level of Ethernet traffic; and
control logic (214), coupled to the receive buffers (302, 304, 306), to determine a flow control priority level (610), wherein the flow control priority level (610) is based on at least one of a class-of-service, a type-of-service, and a quality-of-service, and to identity a receive capability of each of the receive buffers (302, 304, 306) and selectively generate control message(s) (600) including the flow control priority level (610) to denote any one of said priority levels above or below which the network interface (120) is able to receive Ethernet traffic, thereby to cause a network device receiving the control message(s) to throttle Ethernet traffic above or below the flow control priority level (610).

15. A network interface (120) according to claim 14, further comprising:
a transmit buffer, responsive to a host network device and the control logic (214), to receive content from one or more application(s) executing on the host network device for transmission to other network device(s) through an Ethernet network, the received content including an indication of priority level.

16. A network interface (120) according to claim 15, wherein the indication of priority
level in the received content is determined by its source application.

17. A network interface (120) according to claim 15, wherein the control logic (214) receives control message(s) (600) from other network interface(s) (102, 104), wherein at least a subset of the control messages (600) include a flow control priority level denoting an inability to receive
Ethernet traffic having a priority level below that of the denoted flow control priority level.

18. A network interface (120) according to claim 17, wherein the control logic (214) suspends transmission of Ethernet traffic having a priority level below that of the denoted flow control priority level from the transmit buffer to the network device (102, 104) having issued the control message (600).

19. A network interface (120) according to claim 14, wherein the control logic (214) is a media access controller (MAC) (206).

20. A network interface (120) according to claim 19, the MAC (206) including enhanced flow control capability to implement flow control on a mere subset of Ethernet traffic.

## Patentansprüche

1. Verfahren, umfassend:
Identifizieren (702) einer Empfangsfähigkeit, die mit mehreren Prioritätsniveaus von Ethernet-Verkehr für ein Netzwerkgerät (102, 104) verbunden ist;
Feststellen eines Ablaufsteuerungsprioritätsniveaus (610), das auf einer Serviceklasse, einer Serviceart und/oder einer Servicequalität beruht, wobei das Ablaufsteuerungsprioritätsniveau (610) eines der mehreren Prioritätsniveaus bezeichnet, oberhalb und unterhalb dessen das Netzwerkgerät (102, 104) Ethernet-Verkehr aufnehmen kann; und
Erzeugen (710) einer Steuernachricht (600), die das Ablaufsteuerungsprioritätsniveau (610) einschließt, um eine Drosselung des Ethernet-Verkehrs oberhalb oder unterhalb des Ablaufsteuerungsprioritätsniveaus von Netzwerkgeräten, die die Steuernachricht erhalten, zu bewirken.

2. Verfahren nach Anspruch 1, ferner umfassend:
Übertragen der erzeugten Steuernachricht (600) an ein kommunikativ angeschlossenes Netzwerkgerät, wobei nach dem Erhalt der erzeugten Steuernachricht (600) das kommunikativ angeschlossene Netzwerkgerät gemäß der erhaltenen Steuernachricht (600) das Unterbrechen einer Teilmenge des Ethernet-Verkehrs bewirkt.

3. Verfahren nach Anspruch 1, wobei das Identifizieren umfasst:
Feststellen der verfügbaren Pufferkapazität für jeden von mehreren Puffern (302, 304, 306), die einer gleich großen Menge von Ethernet-Prioritätsniveaus zugeordnet sind.

4. Verfahren nach Anspruch 3, wobei die verfügbare Pufferkapazität, die einem bestimmten Ethernet-Prioritätsniveau zugeordnet ist, die Fähigkeit des Puffers (302, 304, 306) bezeichnet, zusätzlichen Ethernet-Verkehr mit diesem Prioritätsniveau zu empfangen.

5. Verfahren nach Anspruch 3, wobei der Puffer (302, 304, 306) für jedes Prioritätsniveau aus einem oder mehreren Speichergeräten gebildet ist.

6. Verfahren nach Anspruch 3, wobei die Puffer (302, 304, 306), die jedem der Prioritätsniveaus zugeordnet sind, virtuelle Puffer sind, die innerhalb eines gemeinsamen physischen Puffers implementiert sind.

7. Verfahren nach Anspruch 3, wobei die erzeugte Steuernachricht (600) die Angabe des Prioritätsniveaus umfasst, oberhalb dessen ein Empfangspuffer verfügbare Kapazität zum Empfangen von Ethernet-Verkehr mit einem zugeordneten Prioritätsniveau aufweist.

8. Verfahren nach Anspruch 7, wobei ein empfangendes Netzwerkgerät eine Pause in der Übertragung von Ethernet-Verkehr auslöst, der ein Prioritätsniveau aufweist, welches unter dem liegt, das in der empfangenen Steuernachricht(600) angegeben ist.

9. Verfahren nach Anspruch 1, wobei das Erzeugen der Steuernachricht (600) umfasst:
Erzeugen eines Ethernet-Steuerdatenpakets, das ein Prioritätsfeld aufweist, wobei das Prioritätsfeld das Ablaufsteuerungsprioritätsniveau (610) bezeichnet.

10. Verfahren nach Anspruch 9, wobei das Prioritätsfeld im Kopfabschnitt des Ethernet-Steuerdatenpakets enthalten ist.

11. Verfahren nach Anspruch 1, ferner umfassend:
Empfangen von Ethernet-Verkehr;
Identifizieren eines Prioritätsniveaus, das jedem Paket von empfangenem Ethernet-Verkehr zugeordnet ist; und
Weiterleiten jedes empfangenen Pakets an einen Empfangspuffer, der zumindestens teilweise auf dem identifizierten Prioritätsniveau, das dem Ethernet-Paket zugeordnet ist, basiert.

12. Verfahren nach Anspruch 11, ferner umfassend:
Überwachen der Empfangsfähigkeit von Puffern, die jedem der Prioritätsniveaus von Ethernet-Verkehr zugeordnet sind; und
Ausgabe von Steuernachrichten nach Bedarf, um das Übertragen von mindestens einer Teilmenge des Ethernet-Verkehrs gemäß der identifizierten Empfangsfähigkeit, die dem einen oder den mehreren Prioritätsniveaus zugeordnet ist, zu drosseln.

13. Datenmedium, das Computerproduktcode darauf gespeichert aufweist, der zum Ausführen aller Schritte nach einem der Ansprüche 1 bis 12 ausgelegt ist, wenn der Programmcode auf einem Computer ausgeführt ist.

14. Netzwerkschnittstelle (120), umfassend:
mehrere Empfangspuffer (302, 304, 306), von denen jeder einem bestimmten Prioritätsniveau des Ethernet-Verkehrs zugeordnet ist; und
Steuerlogik (214), die mit den Empfangspuffern (302, 304, 306) verbunden ist, um ein Ablaufsteuerungsprioritätsniveau (610) zu bestimmen, wobei das Ablaufsteuerungsprioritätsniveau (610) auf einer Serviceklasse, einer Serviceart und/oder einer Servicequalität beruht, und um eine Empfangsfähigkeit von jedem der Empfangspuffer (302, 304, 306) festzustellen und selektiv eine oder mehrerer Steuernachrichten (600), die das Ablaufsteuerungsprioritätsniveau (610) enthalten, zu erzeugen, um eines der Ablaufsteuerungsprioritätsniveaus zu bezeichnen, oberhalb und unterhalb dessen die Netzschnittstelle (120) Ethernet-Verkehr empfangen kann, wodurch bewirkt wird, dass ein Netzwerkgerät, das die Steuernachrichten empfängt, den Ethernet-Verkehr oberhalb oder unterhalb des Ablaufsteuerungsprioritätsniveaus (610) drosselt.

15. Netzwerkschnittstelle (120) nach Anspruch 14, ferner umfassend:
einen Sendepuffer, der auf ein Host-Netzwerkgerät und die Steuerlogik (214) anspricht, um Inhalt von einer oder mehreren Anwendungen zu empfangen, die auf dem Host-Netzwerkgerät ausgeführt werden zur Übertragung auf andere Netzwerkgeräte über das Ethernet-Netz, wobei die empfangenen Inhalte eine Angabe des Prioritätsniveaus enthalten.

16. Netzwerkschnittstelle (120) nach Anspruch 15, wobei die Angabe des Prioritätsniveaus im empfangenen Inhalt durch dessen Quellanwendung bestimmt ist.

17. Netzwerkschnittstelle (120) nach Anspruch 15, wobei die Steuerlogik (214) Steuernachrichten (600) von anderen Netzschnittstellen (102, 104) empfängt, wobei mindestens eine Teilmenge der Steuernachrichten (600) ein Ablaufsteuerungsprioritätsniveau enthält, das eine Unfähigkeit bezeichnet, Ethernet-Verkehr mit einem Prioritätsniveau zu empfangen, welches niedriger als das bezeichnete Ablaufsteuerungsprioritätsniveau ist.

18. Netzwerkschnittstelle (120) nach Anspruch 17, wobei die Steuerlogik (214) das Übertragen von Ethernet-Verkehr abbricht, der ein Prioritätsniveau aufweist, welches niedriger ist als das bezeichnete Ablaufsteuerungsprioritätsniveau vom Sendepuffer zum Netzwerkgerät (102, 104), das die Steuernachrichten (600) ausgegeben hat.

19. Netzwerkschnittstelle (120) nach Anspruch 14, wobei die Steuerlogik (214) ein Medienzugangscontroller (MAC) (206) ist.

20. Netzwerkschnittstelle (120) nach Anspruch 19, wobei der MAC (206) eine verbesserte Ablaufsteuerungssteuerungsfähigkeit aufweist zum Realisieren der Ablaufsteuerung in nur einer Teilmenge des Ethernet-Verkehrs.

## Revendications

1. Procédé comprenant :
l'identification (702) d'une capacité de réception associée à une pluralité de niveaux de priorité de trafic Ethernet d'un périphérique réseau (102, 104) ;
la détermination d'un niveau de priorité de contrôle de flux (610) basé sur au moins une classe de service, un type de service, et une qualité de service, dans lequel le niveau de priorité de contrôle de flux (610) désigne l'un quelconque de ladite pluralité de niveaux de priorité en dessus ou en dessous duquel le périphérique réseau (102, 104) est capable de recevoir du trafic Ethernet ; et
la génération (710) d'un message de contrôle (600) comprenant le niveau de priorité de contrôle de flux (610) pour entraîner un étranglement du trafic Ethernet au dessus ou en dessous du niveau de priorité de contrôle de flux à partir des dispositifs réseau recevant le message de contrôle.

2. Procédé selon la revendication 1, comprenant en outre :
la transmission du message de contrôle généré (600) à un dispositif réseau couplé en communication, suite à laquelle réception du message de contrôle généré (600) le dispositif réseau couplé en communication agit en fonction du message de contrôle (600) reçu pour suspendre un sous-ensemble du trafic Ethernet.

3. Procédé selon la revendication 1, dans lequel l'identification comprend :
la détermination d'une capacité de mémoire tampon disponible pour chacune d'une pluralité de mémoires tampon (302, 304, 306) associée à une pluralité comparable de niveaux de priorité Ethernet.

4. Procédé selon la revendication 3, dans lequel la capacité de mémoire tampon disponible associée à un niveau de priorité Ethernet particulier désigne la capacité de la mémoire tampon (302, 304, 306) à recevoir du trafic Ethernet supplémentaire de ce niveau de priorité.

5. Procédé selon la revendication 3, dans lequel la mémoire tampon (302, 304, 306) pour chaque niveau de priorité est composée d'un ou plusieurs dispositifs de mémoire.

6. Procédé selon la revendication 3, dans lequel les mémoires tampon (302, 304, 306) associées à chacun des niveaux de priorité sont des mémoires tampon virtuelles mises en oeuvre à l'intérieur d'une mémoire tampon physique commune.

7. Procédé selon la revendication 3, dans lequel le message de contrôle généré (600) comprend une indication du niveau de priorité au dessus duquel une mémoire tampon de réception dispose d'une capacité disponible pour recevoir du trafic Ethernet d'un niveau de priorité associé.

8. Procédé selon la revendication 7, dans lequel un dispositif réseau de réception initie une pause dans la transmission du trafic Ethernet dont le niveau de priorité est en dessous de celui indiqué dans le message de contrôle reçu (600).

9. Procédé selon la revendication 1, dans lequel la génération d'un message de contrôle (600) comprend :
la génération d'un paquet de contrôle Ethernet comprenant un champ de priorité, le champ de priorité désignant le niveau de priorité de contrôle de flux (610).

10. Procédé selon la revendication 9, dans lequel le champ de priorité est inclus dans une partie d'en-tête du paquet de contrôle Ethernet.

11. Procédé selon la revendication 1, comprenant en outre :
la réception de trafic Ethernet ;
l'identification d'un niveau de priorité associé à chaque paquet de trafic Ethernet reçu ; et
le transfert de chaque paquet reçu vers une mémoire tampon de réception basé, au moins en partie, sur le niveau de priorité associé identifié avec le paquet Ethernet.

12. Procédé selon la revendication 11, comprenant en outre :
le contrôle de la capacité de réception des mémoires tampon associées à chacun des niveaux de priorité du trafic Ethernet ; et
l'émission de messages de contrôle, si nécessaire, pour étrangler la transmission d'au moins un sous-ensemble du trafic Ethernet en fonction de la capacité de réception identifiée associée à un ou plusieurs niveaux de priorité.

13. Support de données sur lequel un code de produit informatique est stocké, adapté pour effectuer toutes les étapes de l'une quelconque des revendications 1 à 12 lorsque ledit code de programme est exécuté sur un ordinateur.

14. Interface réseau (120) comprenant :
une pluralité de mémoires tampon de réception (302, 304, 306), chacune associée à un niveau de priorité de trafic Ethernet particulier; et
une logique de contrôle (214), couplée aux mémoires tampon de réception (302, 304, 306), pour déterminer un niveau de priorité de contrôle de flux (610), dans lequel le niveau de priorité de contrôle de flux (610) est basé sur au moins une classe de service, un type de service, et une qualité de service, et pour identifier une capacité de réception de chacune des mémoires tampon de réception (302, 304, 306) et pour générer de manière sélective un ou des messages de contrôle (600) comprenant le niveau de priorité de contrôle de flux (610) pour désigner l'un quelconque desdits niveaux de priorité en dessus ou en dessous duquel l'interface réseau (120) est capable de recevoir du trafic Ethernet, entraînant ainsi un dispositif réseau recevant le ou les messages de contrôle à étrangler le trafic Ethernet au dessus ou en dessous du niveau de priorité de contrôle de flux (610).

15. Interface réseau (120) selon la revendication 14, comprenant en outre :
une mémoire tampon de transmission, répondant à un dispositif réseau hôte et à la logique de contrôle (214), pour recevoir du contenu d'une ou plusieurs applications exécutées sur le dispositif réseau hôte pour une transmission vers un ou plusieurs autres dispositifs réseau à travers un réseau Ethernet, le contenu reçu comprenant une indication du niveau de priorité.

16. Interface réseau (120) selon la revendication 15, dans laquelle l'indication du niveau de priorité dans le contenu reçu est déterminée par son application source.

17. Interface réseau (120) selon la revendication 15, dans laquelle la logique de contrôle (214) reçoit un ou des messages de contrôle (600) d'une ou plusieurs autres interfaces réseau (102, 104), dans laquelle au moins un sous-ensemble des messages de contrôle (600) comprend un niveau de priorité de contrôle de flux désignant une incapacité à recevoir du trafic Ethernet dont le niveau de priorité est en dessous du niveau de priorité de contrôle de flux désigné.

18. Interface réseau (120) selon la revendication 17, dans laquelle la logique de contrôle (214) suspend la transmission du trafic Ethernet dont le niveau de priorité est en dessous du niveau de priorité de contrôle de flux désigné de la mémoire tampon de transmission au dispositif réseau (102, 104) qui a émis le message de contrôle (600).

19. Interface réseau (120) selon la revendication 14, dans laquelle la logique de contrôle (214) est un dispositif de contrôle d'accès au support (MAC) (206).

20. Interface réseau (120) selon la revendication 19, le dispositif de contrôle d'accès au support (MAC) (206) comprenant une capacité de contrôle de flux améliorée pour mettre en oeuvre le contrôle de flux sur un sous-ensemble simple de trafic Ethernet.
